# EUROPEAN PATENT APPLICATION

(11) **EP 4 465 419 A1**
(43) Date of publication of application: **20.11.2024**
(21) Application number: 23806607.0
(22) Date of filing: 24.03.2023
(51) Int. Cl.: H01M 10/658, H01M 10/625, H01M 50/213, H01M 50/249, H01M 50/258, H01M 50/509, H01M 50/503, H01M 50/264, H01M 50/242, H01M 50/244, H01M 50/30, H01M 10/054

(54) **BATTERY AND ELECTRIC DEVICE**

(30) Priority: 18.05.2022 CN 202210537274
(71) Applicant: Jiangsu Contemporary Amperex Technology Limited, Liyang City, Jiangsu 213300 (CN); Contemporary Amperex Technology Co., Limited, Ningde, Fujian 352100 (CN)
(72) Inventor: LI, Quanguo, hangzhou, Jiangsu 213300 (CN); LIU, Qian, hangzhou, Jiangsu 213300 (CN); YE, Yonghuang, hangzhou, Jiangsu 213300 (CN); YU, Chunpeng, hangzhou, Jiangsu 213300 (CN); SUN, Jingxuan, hangzhou, Jiangsu 213300 (CN); XIAO, Dejun, hangzhou, Jiangsu 213300 (CN); CHEN, Jiahua, hangzhou, Jiangsu 213300 (CN)
(74) Representative: Ran, Handong
(86) International application number: PCT/CN2023/083833
(87) International publication number: WO 2023/221649

(57) **Abstract**

The present application relates to the technical field of batteries, and discloses a battery and an electric device. The battery comprises a plurality of first battery cells and a plurality of second battery cells; at least one second battery cell is arranged between any two first battery cells; any one second battery cell is adjacent to the at least one second battery cell; and the thermal stability of the second battery cell is higher than the thermal stability of the first battery cell. According to the technical solution of the embodiments of the present application, the risk of thermal runaway diffusion of the battery can be reduced, so that the safety of the battery is enhanced.

## Description

### Cross-Reference to Related Application

The present application claims priority to Chinese Patent Application No. 202210537274.9, entitled "BATTERY AND POWER CONSUMING DEVICE" and filed on May 18, 2022, which is incorporated herein by reference in its entirety.

### Technical Field

The present application relates to the technical field of batteries, and particularly to a battery and a power consuming device.

### Background Art

Energy conservation and emission reduction are the keys to the sustainable development of the automobile industry. In this context, electric vehicles play an important part in the sustainable development of the automobile industry because of their advantages in energy conservation and environmental protection. Further, for the electric vehicles, the battery technology is an important factor to their development.

In the development of the battery technology, in addition to improving the performance of batteries, the safety is also a non-negligible issue. If the safety of the batteries cannot be guaranteed, the batteries cannot be used. Therefore, how to enhance the safety of batteries is an urgent technical problem to be solved in the battery technology.

### Summary of the Invention

Embodiments of the present application provide a battery and a power consuming device, which can effectively reduce the risk of the spread of thermal runaway of the battery and thus improve the safety of the battery.

In a first aspect, the present application provides a battery, including: a plurality of first battery cells and a plurality of second battery cells, at least one of the second battery cells being provided between any two of the first battery cells, and any one of the second battery cells being adjacent to at least one of the second battery cells; wherein the thermal stability of the second battery cell is higher than the thermal stability of the first battery cell.

In the embodiment of the present application, the battery includes the plurality of first battery cells and the plurality of second battery cells, at least one second battery cell is provided between any two first battery cells, and the thermal stability of the second battery cell is higher than the thermal stability of the first battery cell, that is to say, a plurality of first battery cells with poor thermal stability are separated by the second battery cells with good thermal stability, so that when the first battery cell undergoes thermal runaway, the risk of the spread of thermal runaway is reduced due to the separation of the second battery cells, and thus the safety of the battery is enhanced.

In some embodiments, the capacity of the first battery cell is greater than the capacity of the second battery cell.

In this way, it can also be ensured that the battery has a large capacity while reducing the risk of the spread of thermal runaway of the battery, the life of the battery is prolonged, and the performance of the battery is improved.

In some embodiments, the second battery cell is a sodium-ion battery.

An electrode material used for the sodium-ion battery mainly contains a sodium salt, and sodium salt raw materials are abundant in reserves and cheap. Due to the characteristics of the sodium salt, a low-concentration electrolyte solution is allowed to be used, so that production costs can be reduced; and sodium ions have good thermal stability, so that the spread of thermal runaway can be blocked effectively.

In some embodiments, the battery includes: a plurality of battery cell groups, each of the plurality of battery cell groups including a plurality of first battery cells and a plurality of second battery cells that are arranged in a first direction, wherein two of the first battery cells are separated in the first direction by at least two adjacent second battery cells, and the plurality of battery cell groups are arranged in a second direction; in the second direction, there is at least one second battery cell between any two of the first battery cells; and the first direction intersects with the second direction, and the first direction and the second direction are both perpendicular to an axis of the first battery cell and an axis of the second battery cell. Such an arrangement can ensure that any one first battery cell is surrounded by the second battery cells, blocking the spread of thermal runaway.

In some embodiments, the first battery cell and the second battery cell are cylindrical battery cells, and the plurality of battery cell groups are arranged in a staggered manner in the second direction. The battery cells of two adjacent battery cell groups are provided in the staggered manner, so that a space between adjacent curved surfaces can be fully utilized.

In some embodiments, the axes of all the battery cells in two adjacent ones of the battery cell groups have non-coincident orthographic projections on a first plane, the axes of all the battery cells in two of the battery cell groups which are not adjacent to each other but are separated by one of the battery cell groups have coincident orthographic projections on the first plane, and the first plane is perpendicular to a plane formed by the first direction and the second direction.

The battery cells in different battery cell groups may be arranged in a staggered manner, reducing gaps between the plurality of battery cells. This staggered arrangement makes reasonable use of space and improves the space utilization rate of the plurality of battery cells in the battery.

In some embodiments, in the battery cell group, two adjacent ones of the second battery cells and one of the first battery cells are alternately arranged in the first direction.

In some embodiments, the battery comprises a bus component, and the bus component is configured to connect two adjacent ones of the second battery cells in parallel and then connect these second battery cells to one of the first battery cells in series.

By connecting two lower-capacity second battery cells in parallel and then connecting the second battery cells to the first battery cell in series by means of the bus component, it can be ensured that the exertion of the discharge capacity of the battery is not affected by the lower-capacity second battery cells, and the high capacity of the battery is ensured.

In some embodiments, the bus component includes a first connecting portion and a second connecting portion, and the first connecting portion and the second connecting portion form a V shape; wherein a first end of the first connecting portion is connected to an electrode terminal of one of the two adjacent second battery cells, a second end of the first connecting portion is connected to a third end of the second connecting portion and is then connected to a terminal post of the one of the first battery cells, and a fourth end of the second connecting portion is connected to an electrode terminal of the other of the two adjacent second battery cells.

The bus component is V-shaped and can ensure that two adjacent second battery cells are connected in parallel and are then connected to one first battery cell in series when the two adjacent second battery cells and the one first battery cell in the battery cell group are alternately arranged in the first direction, so that the exertion of the discharge capacity of the battery is not affected by the lower-capacity second battery cells, and it is ensured that the battery has a high capacity. The V-shaped bus component can further ensure that binding forces between the one first battery cell and the two second battery cells are the same, making it impossible that deformation occurs due to expansion of the battery 10 in a later cycling stage.

In some embodiments, an included angle between the first connecting portion and the second connecting portion is 40°-70°.

In some embodiments, the included angle between the first connecting portion and the second connecting portion is 50°-65°.

On the basis of the arrangement of the battery cells, such an included angle setting can ensure that two end portions of each of the first connecting portion and the second connecting portion can both be connected to the electrode terminals of the corresponding battery cells, so that the bus component connects two adjacent second battery cells in parallel and then connects the two adjacent second battery cells to the first battery cell in series.

In some embodiments, the width W1 of the first connecting portion and the width W2 of the second connecting portion satisfy: W1 = W2.

In this way, it can be ensured that the currents flowing through two second battery cells are equal, and that the current consistency of the two second battery cells is higher.

In some embodiments, the bus component includes a third connecting portion and a fourth connecting portion, and the third connecting portion and the fourth connecting portion form a T shape; wherein a first end and a second end of the third connecting portion are respectively connected to electrode terminals of the two adjacent second battery cells, and a third end of the fourth connecting portion is connected to an electrode terminal of the one of the first battery cells, and a fourth end of the fourth connecting portion is connected to a middle part of the third connecting portion.

The bus component is T-shaped and can ensure that two adjacent second battery cells are connected in parallel and are then connected to one first battery cell in series when the two adjacent second battery cells and the one first battery cell in the battery cell group are alternately arranged in the first direction, so that the exertion of the discharge capacity of the battery is not affected by the lower-capacity second battery cells, and it is ensured that the battery has a high capacity.

In some embodiments, the width W3 of the third connecting portion and the width W4 of the fourth connecting portion satisfy: W3 ≤ W4.

Since the bus component is T-shaped, a current at an intersection of the T shape is shunted into two paths of current that flow through the two second battery cells respectively. Therefore, the width W3 of the third connecting portion also decreases accordingly, the weight of the bus component can be reduced, and the gravimetric energy density of the battery can be improved.

In some embodiments, the battery includes end plates, and the end plates are provided at two ends of the battery cell group in the first direction.

The end plates are provided at the two ends of the battery cell group to fix the battery cell group, restricting the movement of the battery cells in the battery, ensuring the stability of the internal structure of the battery, and improving the safety of the battery.

In some embodiments, a first surface of the end plate facing the interior of the battery is provided with a structural member protruding towards the interior of the battery, and the structural member is filled in a space between the battery cells at an end portion of the battery in the first direction and the first surface of the end plate.

In this way, it can be ensured that there is no extra space between the battery cells and the end plate, the movement of the battery cells in the first direction is thus further restricted, the stability of the internal structure of the battery is ensured, and the safety of the battery is improved.

In some embodiments, the structural member is a trapezoidal structural member, which comprises a top wall provided opposite to the end plate in the first direction and side walls connected to the end plate, and the top wall and the side walls abut against the battery cells at the end portion of the battery in the first direction.

Due to the shape design of the trapezoidal structural member, the top wall and the side walls of the trapezoidal structural member can abut against cylindrical surfaces of the battery cells at the end portion of the battery in the first direction, thereby restricting the movement of the battery cells at the end portion of the battery in the first direction.

In some embodiments, a second surface of the end plate facing away from the interior of the battery is provided with a reinforcing rib.

By providing the reinforcing rib on the surface of the end plate, it can be prevented that the battery cell expands to press the end plate, causing the end plate to deform.

In some embodiments, the reinforcing rib is of an X-shaped structure. The reinforcing rib of the X-shaped structure can more effectively prevent the deformation of the end plate.

In some embodiments, the end plate is of a hollow structure. In this way, the weight of the end plate can be reduced, and the gravimetric energy density of the battery can be increased.

In some embodiments, a cross beam is provided in the hollow structure. The cross beam can ensure the structural strength of the end plate and allow the end plate to be less prone to deformation or damage.

In some embodiments, the battery includes side plates, the side plates are provided at two ends of the battery cell group in a third direction, and the third direction is parallel to the axes of the battery cells.

The side plates are provided at the two ends of the battery cell group to fix the battery cell group, restricting a movement of the battery cells in the battery, ensuring the stability of the internal structure of the battery, and improving the safety of the battery.

In some embodiments, a third surface of the side plate facing the interior of the battery is provided with grooves recessed in a direction away from the interior of the battery, a fourth surface of the side plate facing away from the interior of the battery is provided with protrusions corresponding to the grooves and protruding in the direction away from the interior of the battery, and the grooves are provided corresponding to the battery cell groups.

In some embodiments, the groove extends in the first direction and is provided opposite to an explosion-proof valve of each battery cell in the battery cell group in the third direction.

In this way, there is a certain distance between the explosion-proof valve of the battery cell and the side plate, so that emissions released by the explosion-proof valve can be avoided from directly impacting the side plate to damage the side plate; and the groove extending in the first direction can guide the emissions out from the battery in an extension direction of the groove.

In some embodiments, the thickness of a bottom wall of the groove opposite to the corresponding explosion-proof valve is greater than the thickness of other regions of the side plate except the groove.

By setting the bottom wall of the groove to be thicker, it can be prevented that the bottom wall of the groove is damaged due to the impact of the emissions released by the cracking explosion-proof valve.

In a second aspect, the present application provides a power consuming device, including: a battery according to the above first aspect or any possible implementation of the first aspect, the battery being configured to supply electric energy.

In the technical solution of the embodiment of the present application, at least one second battery cell is provided between any two first battery cells, and the thermal stability of the second battery cell is higher than the thermal stability of the first battery cell, that is to say, a plurality of first battery cells with poor thermal stability are separated by the second battery cells with good thermal stability, so that when the first battery cell undergoes thermal runaway, the risk of the spread of thermal runaway is reduced due to the separation of the second battery cells, and thus the safety of the battery is enhanced.

### Brief Description of the Drawings

To more clearly illustrate the technical solutions of the embodiments of the present application, the accompanying drawings required in the embodiments of the present application will be briefly described below. Obviously, the accompanying drawings described below are merely some embodiments of the present application, and for those of ordinary skill in the art, other accompanying drawings can be obtained from these accompanying drawings without making inventive efforts.
FIG. 1 is a schematic structural diagram of a vehicle disclosed in an embodiment of the present application;
FIG. 2 is a schematic diagram of a partial structure of a battery disclosed in an embodiment of the present application;
FIG. 3 is a schematic diagram of a partial structure of a battery disclosed in an embodiment of the present application;
FIG. 4 is a schematic diagram of a partial structure of a battery disclosed in an embodiment of the present application;
FIG. 5 is a schematic structural diagram of a first battery cell and a second battery cell disclosed in an embodiment of the present application;
FIG. 6 is a schematic diagram of a partial structure of a battery disclosed in an embodiment of the present application;
FIG. 7 is a schematic diagram of a V-shaped bus component disclosed in an embodiment of the present application;
FIG. 8 is a schematic diagram of a T-shaped bus component disclosed in an embodiment of the present application;
FIG. 9 is an exploded view of a battery disclosed in an embodiment of the present application;
FIG. 10 is a schematic diagram of a partial structure of a battery disclosed in an embodiment of the present application; and

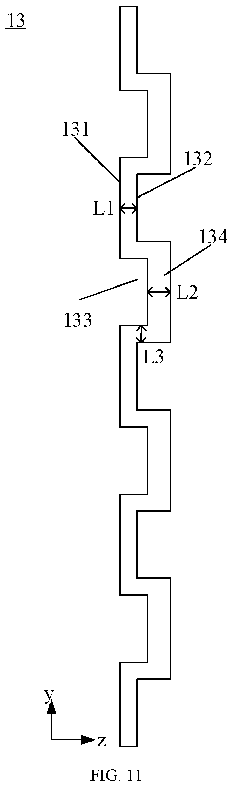

FIG. 11 is a schematic diagram of a side plate disclosed in an embodiment of the present application.

In the accompanying drawings, the figures are not drawn to scale.

### Detailed Description of Embodiments

The technical solutions in embodiments of the present application will be described below with reference to the accompanying drawings. The implementations of the present application will be further described in detail below in conjunction with the accompanying drawings and embodiments. The following detailed description of the embodiments and the accompanying drawings are used to illustrate the principle of the present application by way of example and are not intended to limit the scope of the present application. That is, the present application is not limited to the described embodiments.

In the description of the present application, it should be noted that "a plurality of" means two or more, unless otherwise specified. The orientation or position relationship indicated by the terms "upper", "lower", "left", "right", "inner", "outer", etc. is only for the convenience of describing the present application and simplifying the description, rather than indicating or implying that the device or element referred to must have a particular orientation or be constructed and operated in a particular orientation, and therefore should not be construed as a limitation on the present application. In addition, the terms "first", "second", "third", etc. are merely for descriptive purposes, and should not be construed as indicating or implying the relative importance. The term "perpendicular" does not mean being perpendicular in the strict sense, but within an allowable range of tolerance. The term "parallel" does not mean being parallel in the strict sense, but within an allowable range of tolerance.

The orientation terms in the following description all indicate directions shown in the accompanying drawings, and do not limit the specific structure in the present application. In the description of the present application, it should also be noted that the terms "mounting", "connecting", and "connection" should be interpreted in the broad sense unless explicitly defined and limited otherwise. For example, the connection may be a fixed connection, a detachable connection, or an integral connection, or may be a direct connection, or an indirect connection by means of an intermediate medium. For those of ordinary skill in the art, the specific meanings of the terms mentioned above in the present application can be construed according to specific circumstances.

In the embodiments of the present application, the same reference numerals denote the same components, and for the sake of brevity, the detailed description of the same components is omitted in different embodiments. It should be understood that the dimensions, such as thickness, length and width, of the various components in the embodiments of the present application illustrated in the accompanying drawings, as well as the dimensions, such as an overall thickness, length and width, of an integrated apparatus are merely illustrative and should not be construed to limit the present application in any way.

In the present application, a battery cell may include a lithium-ion secondary battery, a lithium-ion primary battery, a lithium-sulfur battery, a sodium/lithium-ion battery, a sodium-ion battery or a magnesium-ion battery, etc., which will not be limited in the embodiments of the present application. The battery cell may be cylindrical, flat, cuboid or in another shape, which will not be limited by the embodiments of the present application. The battery cells are generally classified into three types depending on the way of package: cylindrical battery cells, prismatic battery cells and pouch battery cells, which will also not be limited in the embodiments of the present application.

A battery mentioned in the embodiments of the present application refers to a single physical module including one or more battery cells to provide a higher voltage and capacity. For example, the battery mentioned in the present application may include a battery module, a battery pack, etc. The battery generally includes a case for packaging one or more battery cells. The case can prevent liquid or other foreign matter from affecting charging or discharging of the battery cell(s).

The battery cell includes an electrode assembly and an electrolyte solution. The electrode assembly is composed of a positive electrode plate, a negative electrode plate and a separator. The battery cell operates mainly by relying on movements of metal ions between the positive electrode plate and the negative electrode plate. The positive electrode plate includes a positive electrode current collector and a positive electrode active material layer. A surface of the positive electrode current collector is coated with the positive electrode active material layer, the positive electrode current collector not coated with the positive electrode active material layer protrudes from the positive electrode current collector coated with the positive electrode active material layer, and the positive electrode current collector not coated with the positive electrode active material layer serves as a positive tab. Taking a lithium ion battery as an example, the positive electrode current collector may be made from aluminum, and the positive electrode active material may be lithium cobalt oxide, lithium iron phosphate, ternary lithium, lithium manganate, etc. The negative electrode plate includes a negative electrode current collector and a negative electrode active material layer. A surface of the negative electrode current collector is coated with the negative electrode active material layer, the negative electrode current collector not coated with the negative electrode active material layer protrudes from the negative electrode current collector coated with the negative electrode active material layer, and the negative electrode current collector not coated with the negative electrode active material layer serves as a negative tab. The negative electrode current collector may be made of copper, and the negative electrode active material may be carbon, silicon, etc. In order to ensure that no fusing occurs when a large current passes, a plurality of positive tabs are provided and are stacked together, and a plurality of negative tabs are provided and are stacked together. The separator may be made of polypropylene (PP), polyethylene (PE), etc. In addition, the electrode assembly may be of a wound structure or a laminated structure, which will not be limited in the embodiments of the present application.

At present, from the perspective of the development of the market situation, traction batteries are used more and more widely. The traction batteries are not only used in energy storage power systems such as hydroelectric power plants, thermal power plants, wind power plants and solar power plants, but also widely used in electric transportation means such as electric bicycles, electric motorcycles, and electric vehicles and in many fields such as military equipment and aerospace. With the continuous expansion of the application field of traction batteries, the market demand for the traction batteries is also expanding.

In the development of the battery technology, in addition to improving the performance of batteries, the safety is also a non-negligible issue. During the use of the batteries, the risk of thermal runaway of the batteries is extremely high. Therefore, how to effectively prevent the spread of thermal runaway and reduce the risk of the spread of thermal runaway are the focuses of researchers.

In view of this, an embodiment of the present application provides a battery. The battery includes: a plurality of first battery cells and a plurality of second battery cells, at least one of the second battery cells being provided between any two of the first battery cells, and any one of the second battery cells being adjacent to at least one of the second battery cells; wherein the thermal stability of the second battery cell is higher than the thermal stability of the first battery cell. In the embodiment of the present application, at least one second battery cell is provided between any two first battery cells, and the thermal stability of the second battery cell is higher than the thermal stability of the first battery cell, that is to say, a plurality of first battery cells with poor thermal stability are separated by the second battery cells with good thermal stability, so that when the first battery cell undergoes thermal runaway, the risk of the spread of thermal runaway is reduced due to the separation of the second battery cells, and thus the safety of the battery is enhanced.

The technical solution described in the embodiments of the present application is applicable to various power consuming devices using batteries.

The power consuming device may be a vehicle, a mobile phone, a portable device, a notebook computer, a ship, a spacecraft, an electric toy, an electric tool, etc. The vehicle may be a fuel vehicle, a gas vehicle or a new-energy vehicle. The new-energy vehicle may be a battery electric vehicle, a hybrid vehicle, an extended-range vehicle, etc. The spacecraft includes an airplane, a rocket, an aerospace plane, a spaceship, etc. The electric toy includes a stationary or mobile electric toy, such as a game machine, an electric toy car, an electric toy ship, and an electric toy airplane. The electric tool includes a metal cutting electric tool, a grinding electric tool, an assembling power tool, and a railway power tool, such as an electric drill, an electric grinder, an electric wrench, an electric screwdriver, an electric hammer, an electric impact drill, a concrete vibrator, and an electric planer. The power consuming devices described above are not specially limited in the embodiments of the present application.

For ease of description, an example in which the power consuming device refers to a vehicle is used for description in the following embodiments.

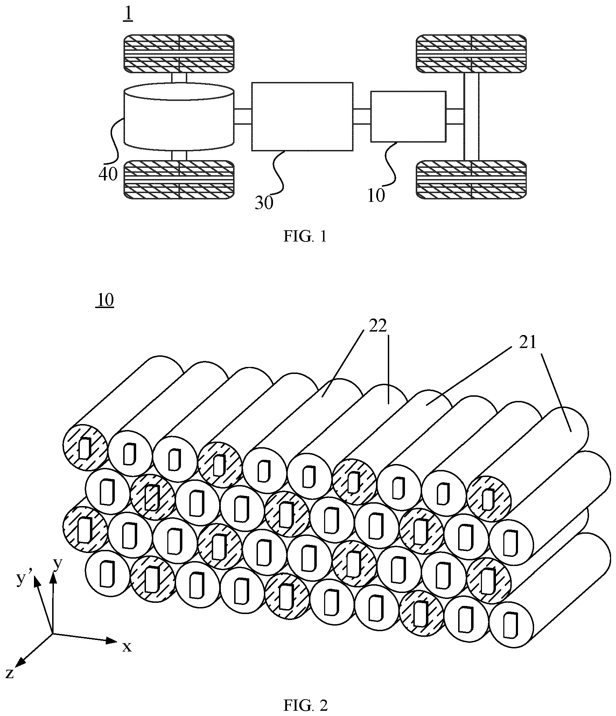

For example, FIG. 1 shows a schematic structural diagram of a vehicle 1 according to an embodiment of the present application. The vehicle 1 may be a fuel vehicle, a gas vehicle, or a new-energy vehicle. The new-energy vehicle may be a battery electric vehicle, a hybrid vehicle, an extended-range vehicle, etc. The vehicle 1 may be internally provided with a motor 40, a controller 30 and a battery 10. The controller 30 is used for controlling the battery 10 to supply power to the motor 40. For example, the battery 10 may be arranged at the bottom, the head, or the tail of the vehicle 1. The battery 10 may be configured to supply power to the vehicle 1. For example, the battery 10 may serve as a power source for operating the vehicle 1 for use in a circuit system of the vehicle 1, for example, to satisfy the working power demand of the vehicle 1 during startup, navigation and running. In another embodiment of the present application, the battery 10 may not only serve as a power source for operating the vehicle 1, but may also serve as a power source for driving the vehicle 1, instead of or partially instead of fuel or natural air, to provide driving power for the vehicle 1.

The battery may include a plurality of battery cells in order to meet different power demands, with the plurality of battery cells being in series connection, in parallel connection, or in series-parallel connection. The series-parallel connection refers to a combination of series connection and parallel connection. The battery may also be referred to as a battery pack. In some embodiments, the plurality of battery cells may be in series connection or in parallel connection or in series-parallel connection to form battery modules, and then the multiple battery modules are connected in series, in parallel or in series-parallel to form a battery. That is, the plurality of battery cells may directly form a battery, or may form battery modules that may then form a battery.

FIG. 2 shows a schematic diagram of a partial structure of a battery 10 according to an embodiment of the present application. As shown in FIG. 2, the battery 10 according to the embodiment of the present application includes: a plurality of first battery cells 21 and a plurality of second battery cells 22. At least one of the second battery cells 22 is provided between any two of the first battery cells 21, any one of the second battery cell 22 is adjacent to at least one second battery cell 22, and the thermal stability of the second battery cell 22 is higher than the thermal stability of the first battery cell 21.

It should be understood that the battery cells in FIG. 2 are a schematic illustration of the battery cells in the embodiment of the present application, and the battery cells in the embodiment of the present application are not limited thereto. For example, the battery cells in the embodiment of the present application may also be flat, cuboid, or in other shapes.

The thermal stability of the battery cell means a highest temperature to which the fully charged battery cell can be tolerant in a high-temperature environment and at which no fiery explosion occurs. The higher the temperature the battery cell can withstand, the better the thermal stability of the battery cell. Therefore, when some of the battery cells in the battery 10 catch fire, the probability of the spread of thermal runaway due to that the surrounding battery cells undergo high-temperature baking is lower.

The battery 10 in the embodiment of the present application includes the plurality of first battery cells 21 and the plurality of second battery cells 22, at least one second battery cell 22 is provided between any two first battery cells 21, and the thermal stability of the second battery cell 22 is higher than the thermal stability of the first battery cell 21, that is to say, a plurality of first battery cells 21 with poor thermal stability are separated by the second battery cells 22 with good thermal stability, so that when the first battery cell 21 undergoes thermal runaway, the risk of the spread of thermal runaway is reduced due to the separation of the second battery cells 22, and thus the safety of the battery 10 is enhanced.

In an embodiment of the present application, the capacity of the first battery cell 21 is greater than the capacity of the second battery cell 22.

The capacity of a battery cell refers to the amount of energy stored in the battery cell. Specifically, the capacity of the battery cell is one of the important performance indicators for evaluating the performance of the battery cell, represents the amount of electricity released by the battery cell under certain conditions (discharge rate, temperature, termination voltage, etc.) (JS-150D may be used for discharge testing).

In this way, it may also be ensured that the battery 10 has a large capacity while the risk of the spread of thermal runaway of the battery 10 is reduced, the life of the battery 10 is prolonged, and the performance of the battery 10 is improved.

Optionally, in an embodiment of the present application, the second battery cell 22 is a sodium-ion battery.

An electrode material used for the sodium-ion battery mainly contains a sodium salt, and sodium salt raw materials are abundant in reserves and cheap. Due to the characteristics of the sodium salt, a low-concentration electrolyte solution is allowed to be used, so that production costs can be reduced; and sodium ions have good thermal stability, so that the spread of thermal runaway can be blocked effectively.

Optionally, in an embodiment of the present application, the first battery cell 21 may be a lithium-ion battery.

Although the thermal stability of the lithium-ion battery is poorer than that of the sodium-ion battery, the lithium-ion battery has a larger capacity, so that the battery 10 having a larger capacity can be ensured.

Lithium-ion batteries include lithium iron phosphate batteries, lithium manganese iron phosphate batteries, ternary batteries, etc. The present application does not limit the types of the lithium-ion batteries.

In an embodiment of the present application, as shown in FIG. 2, the battery 10 includes: a plurality of battery cell groups. Each of the plurality of battery cell groups includes a plurality of first battery cells 21 and a plurality of second battery cells 22 that are arranged in a first direction x. Two of the first battery cells 21 are separated in the first direction x by at least two adjacent second battery cells 22, and the plurality of battery cell groups are arranged in a second direction y. In the second direction y, there is at least one second battery cell 22 between any two of the first battery cells 21. The first direction x intersects with the second direction y, and the first direction x and the second direction y are both perpendicular to an axis of the first battery cell 21 and an axis of the second battery cell 22.

It should be understood that the second direction y intersects with the first direction x, that is, the second direction y intersects with the arrangement direction of the battery cells in the battery cell group. The second direction y may be perpendicular to the arrangement direction of the battery cells in the battery cell group, or may form an included angle with the arrangement direction of the battery cells in the battery cell group (for example, the y' direction as shown in FIG. 2), but the second direction y needs to be perpendicular to the axis of the first battery cell 21 and the axis of the second battery cell 22. Only two schematic directions are shown in FIG. 2, but the second direction y is not limited thereto.

Such an arrangement can ensure that any one first battery cell 21 is surrounded by the second battery cells 22, blocking the spread of thermal runaway.

In an embodiment of the present application, as shown in FIG. 2, the first battery cells 21 and the second battery cells 22 are cylindrical battery cells, and the plurality of battery cell groups are arranged in a staggered manner in the second direction y. The battery cells of two adjacent battery cell groups are provided in the staggered manner, so that a space between adjacent curved surfaces can be fully utilized.

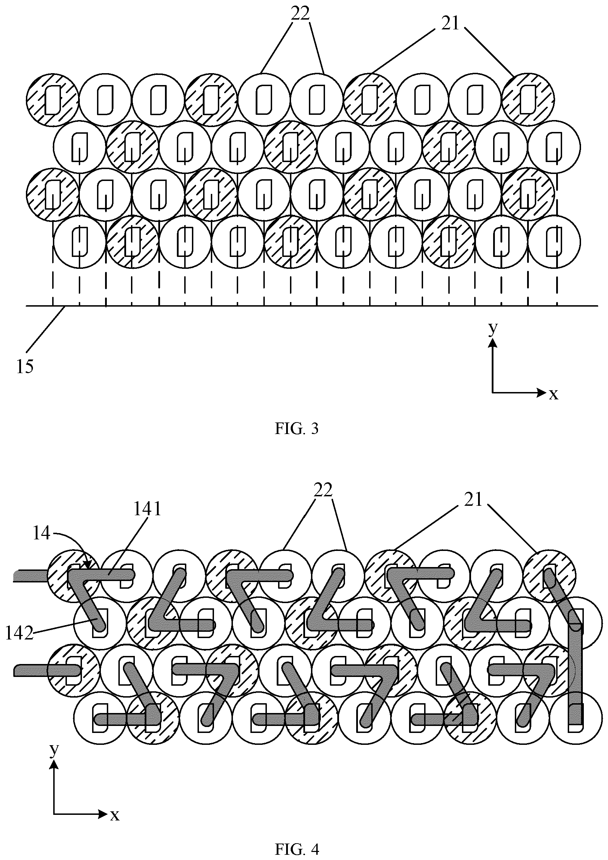

Optionally, in an embodiment of the present application, as shown in FIG. 3, the axes of all the battery cells in two adjacent ones of the battery cell groups have non-coincident orthographic projections on a first plane 15, the axes of all the battery cells in two of the battery cell groups which are not adjacent to each other but are separated by one of the battery cell groups have coincident orthographic projections on the first plane 15, and the first plane 15 is perpendicular to a plane formed by the first direction x and the second direction y.

The battery cells in different battery cell groups may be arranged in a staggered manner, reducing gaps between the plurality of battery cells. This staggered arrangement makes reasonable use of space and improves the space utilization rate of the plurality of battery cells in the battery.

In an embodiment of the present application, as shown in FIG. 2, in the battery cell group, two adjacent ones of the second battery cells 22 and one of the first battery cell 21 are alternately arranged in the first direction x.

It should be understood that the battery 10 in this embodiment of the present application may further include a bus component 14. The bus component 14 is configured to implement an electrical connection, such as parallel connection, series connection, or series-parallel connection, between the plurality of battery cells. Specifically, the bus component 14 may connect two adjacent second battery cells 22 in parallel and then connect the two adjacent second battery cells to one first battery cell 21 in series by connecting the electrode terminals of the battery cells. Further, the bus component 14 may be fixed to the electrode terminals of the battery cells by means of welding.

By connecting two lower-capacity second battery cells 22 in parallel and then connecting the second battery cells to the first battery cell 21 in series by means of the bus component 14, it can be ensured that the exertion of the discharge capacity of the battery 10 is not affected by the lower-capacity second battery cells 22, and the high capacity of the battery 10 is ensured.

Optionally, in an embodiment of the present application, as shown in FIG. 4, the bus component 14 includes a first connecting portion 141 and a second connecting portion 142, and the first connecting portion 141 and the second connecting portion 142 form a V shape.

Specifically, a first end of the first connecting portion 141 is connected to an electrode terminal of one second battery cell 22 of the two adjacent second battery cells 22, a second end of the first connecting portion 141 is connected to a third end of the second connecting portion 142 and is then connected to an electrode terminal of the one first battery cell 21, and a fourth end of the second connecting portion 142 is connected to an electrode terminal of the other second battery cell 22 of the two adjacent second battery cells 22.

The electrode terminal of the battery cell may be configured to be electrically connected to an electrode assembly inside the battery cell to output electric energy. Two electrode terminals included in any one battery cell are taken as an example for description herein. The two electrode terminals are respectively a positive electrode terminal and a negative electrode terminal, the positive electrode terminal is configured to be electrically connected to a positive tab, and the negative electrode terminal is configured to be electrically connected to a negative tab. The positive electrode terminal may be directly or indirectly connected to the positive tab, and the negative electrode terminal may be directly or indirectly connected to the negative tab. For example, the positive electrode terminal is electrically connected to the positive tab by means of a connecting member, and the negative electrode terminal is electrically connected to the negative tab by means of another connecting member.

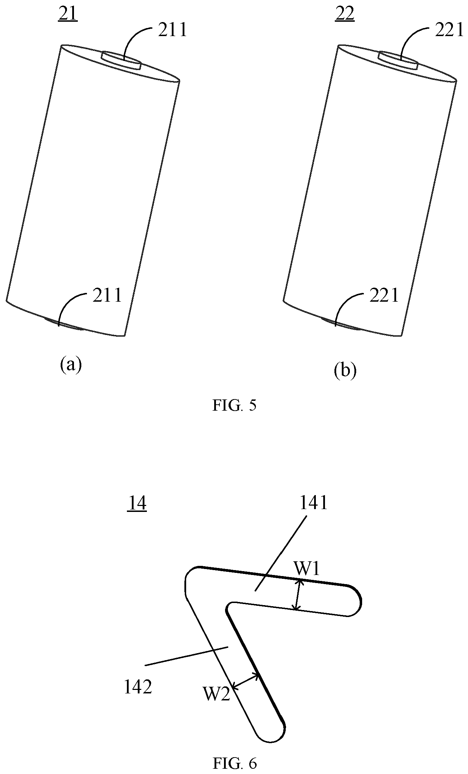

Optionally, the two electrode terminals in an embodiment of the present application may be respectively provided on two cylindrical bottom surfaces of the battery cell. As shown in FIG. 5(a), the two cylindrical bottom surfaces of the first battery cell 21 are each provided with one first electrode terminal 211; and similarly, as shown in FIG. 5(b), the two cylindrical bottom surfaces of the second battery cell 22 are each provided with one second electrode terminal 221, so as to implement electrical connection between the plurality of battery cells.

A material of the bus component 14 may be aluminum, copper, iron, gold, silver or an alloy conductive material, which is not limited in the present application.

The bus component 14 is V-shaped and can ensure that two adjacent second battery cells 22 are connected in parallel and are then connected to one first battery cell 21 in series when the two adjacent second battery cells 22 and the one first battery cell 21 in the battery cell group are alternately arranged in the first direction x, so that the exertion of the discharge capacity of the battery 10 is not affected by the lower-capacity second battery cells 22, it is ensured that the battery 10 has a high capacity. The V-shaped bus component 14 can further ensure that binding forces between the one first battery cell 21 and the two second battery cells 22 are the same, making it impossible that deformation occurs due to expansion of the battery 10 in a later cycling stage.

In an embodiment of the present application, as shown in FIG. 6, an included angle between the first connecting portion 141 and the second connecting portion 142 is represented by α, and α may be 40°-70°.

Optionally, in an embodiment of the present application, the include angle α between the first connecting portion 141 and the second connecting portion 142 may be 50°-65°.

On the basis of the arrangement of the battery cells, the included angle α between the first connecting portion 141 and the second connecting portion 142 is related to whether circumferential surfaces of the first battery cell 21 and the second battery cell 22 have the same diameters. In an embodiment of the present application, the circumferential surfaces of the first battery cell 21 and the second battery cell 22 may have the same or different diameters, so the included angle α between the first connecting portion 141 and the second connecting portion 142 is adjusted according to the relationship between the diameters of the circumferential surfaces of the first battery cell 21 and the second battery cell 22. In this way, it can be ensured that two end portions of each of the first connecting portion 141 and two end portions of the second connecting portion 142 can both be connected to the electrode terminals of the corresponding battery cells, so that the bus component 14 connects two adjacent second battery cells 22 in parallel and then connects the two adjacent second battery cells to the first battery cell 21 in series.

In an embodiment of the present application, as shown in FIG. 6, the width W1 of the first connecting portion 141 and the width W2 of the second connecting portion 142 satisfy: W1 = W2.

In this way, it can be ensured that the currents flowing through two second battery cells 22 are equal, and that the current consistency of the two second battery cells 22 is higher.

Further, in an embodiment of the present application, the width W1 of the first connecting portion 141 and the width W2 of the second connecting portion 142 may be 5 mm-35 mm.

Optionally, in an embodiment of the present application, W1 and W2 may be 10 mm-30 mm.

Such a width setting can ensure that while the bus component 14 implements the electrical connection between the battery cells, the weight of the bus component 14 is reduced, and the gravimetric energy density of the battery 10 is increased.

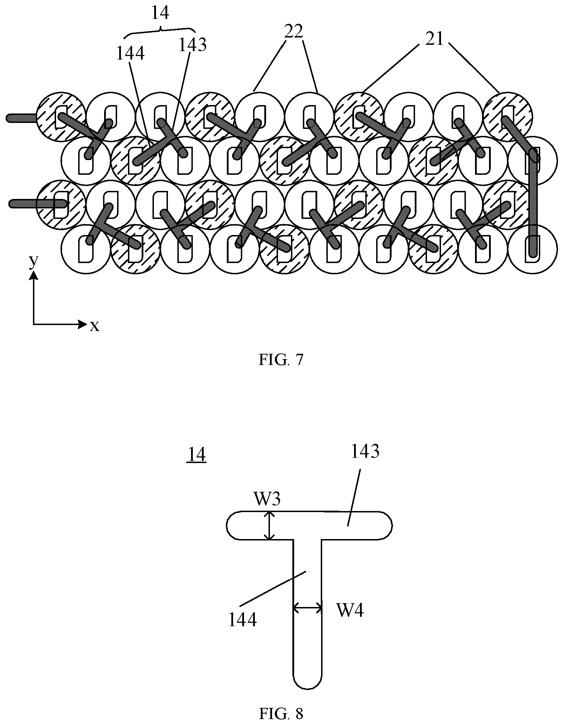

Optionally, in an embodiment of the present application, as shown in FIG. 7, the bus component 14 may alternatively be T-shaped. Specifically, the bus component 14 includes a third connecting portion 143 and a fourth connecting portion 144, and the third connecting portion 143 and the fourth connecting portion 144 form a T shape.

Specifically, a first end and a second end of the third connecting portion 143 are respectively connected to electrode terminals of the two adjacent second battery cells 22, and a third end of the fourth connecting portion 144 is connected to an electrode terminal of the one of the first battery cells 21, and a fourth end of the fourth connecting portion 144 is connected to a middle part of the third connecting portion 143.

The bus component 14 is T-shaped and can ensure that two adjacent second battery cells 22 are connected in parallel and are then connected to one first battery cell 21 in series when the two adjacent second battery cells 22 and the one first battery cell 21 in the battery cell group are alternately arranged in the first direction x, so that the exertion of the discharge capacity of the battery 10 is not affected by the lower-capacity second battery cells 22, and it is ensured that the battery 10 has a high capacity.

In an embodiment of the present application, as shown in FIG. 8, the width W3 of the third connecting portion 143 and the width W4 of the fourth connecting portion 144 satisfy: W3 ≤ W4.

Optionally, in an embodiment of the present application, 1/2W4 ≤ W3 ≤ W4.

Since the bus component 14 is T-shaped, a current at an intersection of the T shape is shunted into two paths of current that flow through the two second battery cells 22 respectively. Therefore, the width W3 of the third connecting portion 143 also decreases accordingly, the weight of the bus component 14 can be reduced, and the gravimetric energy density of the battery 10 can be improved.

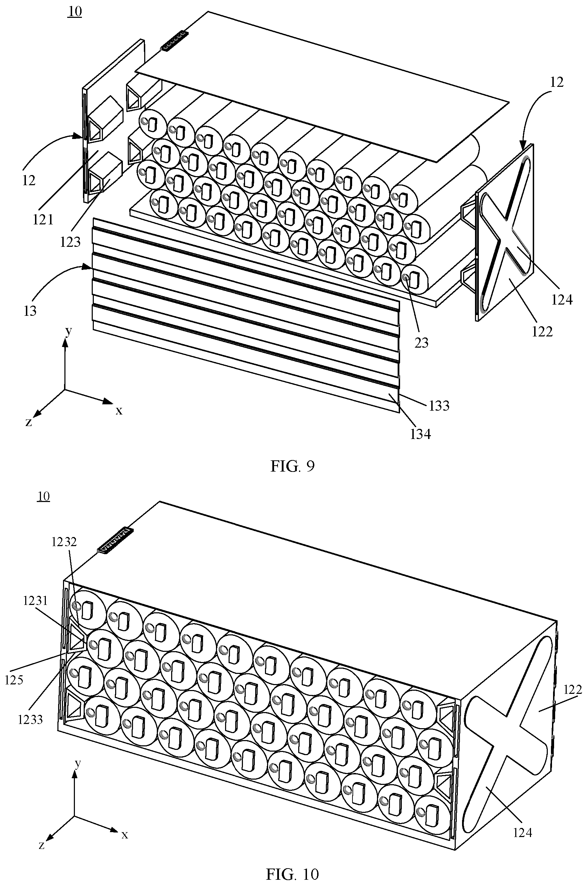

In an embodiment of the present application, as shown in FIG. 9, the battery 10 includes end plates 12, and the end plates 12 are provided at two ends of the battery cell group in the first direction x.

The end plates 12 are provided at the two ends of the battery cell group to fix the battery cell group, restricting a movement of the battery cell in the battery 10, ensuring the stability of the internal structure of the battery 10, and improving the safety of the battery 10.

In an embodiment of the present application, as shown in FIG. 9, a first surface 121 of the end plate 12 facing the interior of the battery 10 is provided with a structural member 123 protruding towards the interior of the battery 10, and the structural member 123 is filled in a space between the battery cells at an end portion of the battery 10 in the first direction x and the first surface 121 of the end plate 12.

In this way, it can be ensured that there is no extra space between the battery cells and the end plate 12, the movement of the battery cells in the first direction x is thus further restricted, the stability of the internal structure of the battery 10 is ensured, and the safety of the battery 10 is improved.

Optionally, in an embodiment of the present application, as shown in FIG. 10, the structural member 123 is a trapezoidal structural member. The trapezoidal structural member includes a top wall 1231 provided opposite to the end plate 12 in the first direction x and side walls connected to the end plate 12, and the top wall 1231 and the side walls abut against the battery cells at the end portion of the battery 10 in the first direction x. As shown in FIG. 10, the side walls of the trapezoidal structural member may be a first side wall 1232 and a second side wall 1233.

It should be understood that the structural member 123 in this embodiment of the present application is a trapezoidal structural member which matches the cylindrical battery cells in this embodiment of the present application. The battery cells in this embodiment of the present application are not limited to the cylindrical battery cells, so the structural member 123 is also not limited to the trapezoidal structural member. The shape and configuration of the structural member 123 in the embodiment of the present application may be designed correspondingly according to the shape of the battery cells and the arrangement form of the battery cells, which will not be limited by the present application.

Due to the shape design of the trapezoidal structural member, the top wall and the side walls of the trapezoidal structural member can abut against the cylindrical surfaces of the battery cells at the end portion of the battery 10 in the first direction x, thereby restricting the movement of the battery cells at the end portion of the battery 10 in the first direction x.

In an embodiment of the present application, a second surface 122 of the end plate 12 facing away from the interior of the battery 10 is provided with a reinforcing rib 124.

By providing the reinforcing rib 124 on the surface of the end plate 12, it can be prevented that the battery cell expands to press the end plate 12, causing the end plate 12 to deform.

Optionally, in an embodiment of the present application, the reinforcing rib 124 is of an X-shaped structure. The reinforcing rib 124 of the X-shaped structure can more effectively prevent the deformation of the end plate 12.

In an embodiment of the present application, the end plate 12 is of a hollow structure. In this way, the weight of the end plate 12 can be reduced, and the gravimetric energy density of the battery 10 can be increased.

Further, a cross beam 125 is provided in the hollow structure. The cross beam 125 can ensure the structural strength of the end plate 12 and allow the end plate 12 to be less prone to deformation or damage.

In an embodiment of the present application, as shown in FIG. 9, the battery 10 includes side plates 13, the side plates 13 are provided at two ends of the battery cell group in a third direction z, and the third direction z is parallel to the axes of the battery cells.

The side plates 13 are provided at the two ends of the battery cell group to fix the battery cell group, restricting the movement of the battery cells in the battery 10, ensuring the stability of the internal structure of the battery 10, and improving the safety of the battery 10.

In an embodiment of the present application, a third surface 131 of the side plate 13 facing the interior of the battery 10 is provided with grooves 133 recessed in a direction away from the interior of the battery 10, a fourth surface 132 of the side plate 13 facing away from the interior of the battery 10 is provided with protrusions 134 corresponding to the grooves 133 and protruding in the direction away from the interior of the battery 10, and the grooves 133 are provided corresponding to the battery cell groups.

Further, the groove 133 extends in the first direction x and is provided opposite to an explosion-proof valve 23 of each battery cell in the battery cell group in the third direction z.

In this way, there is a certain distance between the explosion-proof valve 23 of the battery cell and the side plate 13, so that emissions released by the explosion-proof valve 23 can be avoided from directly impacting the side plate 13 to damage the side plate 13; and the groove 133 extending in the first direction x can guide the emissions out from the battery 10 in an extension direction of the groove 133.

In an embodiment of the present application, the thickness L2 of a bottom wall of the groove 133 opposite to the explosion-proof valve 23 is greater than the thickness L1 of other regions of the side plate 13 except the groove.

By setting the bottom wall of the groove 133 to be thicker, it can be prevented that the bottom wall of the groove 133 is damaged due to the impact of the emissions released by the cracking explosion-proof valve 23.

Optionally, the thickness L3 of each of two side walls of the groove 133 may also be greater than the thickness L1 of other regions of the side plate 13 except the groove 133. In this way, it can be further ensured that the groove 133 accommodating the emissions will not be damaged by an impact force generated when the explosion-proof valve 23 cracks to release the emissions.

An embodiment of the present application further provides a power consuming device, which may include a battery 10 in the above embodiments. Optionally, the power consuming device may be a vehicle 1, a ship, a spacecraft, etc., which will not be limited in the embodiments of the present application.

Hereinafter, the examples of the present application will be explained. The examples described below are exemplary and are merely for explaining the present application, and should not be construed as limiting the present application. The examples in which techniques or conditions are not specified are based on the techniques or conditions described in documents in the art or according to the product instructions.

When the T-shaped bus components in the embodiments of the present application are made of different materials and the third connecting portion and the fourth connecting portion are set to have different widths, the weight thereof is measured. Specific results are shown in Table 1 as follows.

It can be seen from Table 1 that when the width W4 of the fourth connecting portion is constant, the weight of the T-shaped bus component decreases with the width W3 of the third connecting portion. Therefore, while the electrical connection effect of the T-shaped bus component is ensured, the width W3 of the third connecting portion can be decreased as much as possible, so that the weight of the T-shaped bus component can be decreased, and the gravimetric energy density of the battery 10 can be increased. When the T-shaped bus components have the same size, an aluminum T-shaped bus component is lighter than a copper bus component. By manufacturing the T-shaped bus component with an aluminum material, the weight of the T-shaped bus component can also be decreased, and the gravimetric energy density of the battery 10 can be increased.

A thermal stability test was performed on different types of battery cells. A specific test method is as follows. A battery is placed in an environment at 25°C for 2 hours to make the temperature of the battery consistent with the ambient temperature. The battery is then connected to a charge-discharge machine, and the charge-discharge machine is set to charge the battery at a charging rate of 1C until the voltage of the battery reaches a rated upper limit voltage of the battery. The battery is then left to stand for 2 hours to cause the temperature that has been raised during charging of the battery to drop to the room temperature. The fully charged battery is placed in a thermostat, and a heating rate is set to 1°C/minute. When rising to 80°C, the temperature of the thermostat is set to remain for 2 hours. The temperature is then raised by 5°C at the heating rate of 1°C/min, then remains for 30 minutes, is then raised by 5°C, and then remains for 30 minutes until the battery catches fire and explodes, and the temperature at this time is recorded as the highest tolerable temperature of the battery. Test results are shown in Table 2.

It can be seen from Table 2 that, the thermal stability of the sodium-ion battery is better, and the thermal stability thereof is higher than those of the lithium iron phosphate battery, the lithium manganese iron phosphate battery, the ternary five-series battery, the ternary six-series battery, and the ternary eight-series battery.

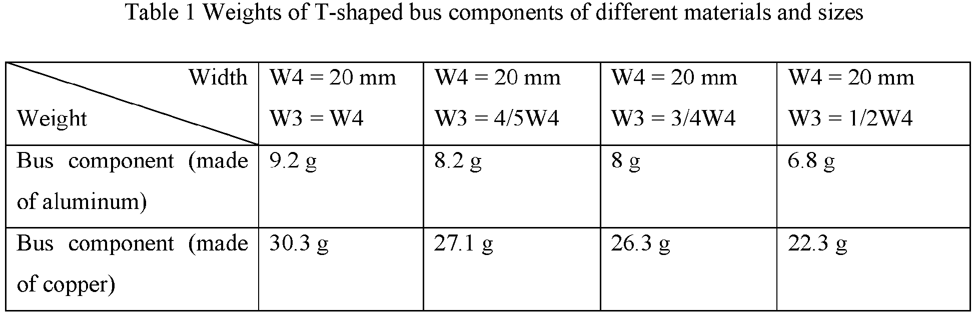

**Table 2 Thermal stability test on different types of battery cells**

| Type | Highest tolerable temperature | Level |
|---|---|---|
| Ternary five-series | 160°C ± 5°C | Fire, explosion |
| Ternary six-series | 150°C ± 5°C | Fire, explosion |
| Ternary eight-series | 130°C ± 5°C | Fire, explosion |
| Lithium iron phosphate | 190°C ± 10°C | Fire, no explosion |
| Sodium-ion battery | 200°C ± 10°C | Fire, no explosion |
| Lithium manganese iron phosphate | 195°C ± 10°C | Fire, no explosion |

While the present application has been described with reference to the preferred embodiments, various modifications can be made, and equivalents can be provided to substitute for the components thereof without departing from the scope of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A battery, **characterized by**:
a plurality of first battery cells (21) and a plurality of second battery cells (22), at least one of the second battery cells (22) being provided between any two of the first battery cells (21), and any one of the second battery cells (22) being adjacent to at least one of the second battery cells (22);
wherein thermal stability of the second battery cell (22) is higher than thermal stability of the first battery cell (21).

2. The battery according to claim 1, wherein capacity of the first battery cell (21) is greater than capacity of the second battery cell (22).

3. The battery according to claim 1 or 2, wherein the second battery cell (22) is a sodium-ion battery.

4. The battery according to any one of claims 1 to 3, comprising:
a plurality of battery cell groups, each of the plurality of battery cell groups comprising a plurality of first battery cells (21) and a plurality of second battery cells (22) that are arranged in a first direction (x), wherein:
two of the first battery cells (21) are separated in the first direction (x) by at least two adjacent second battery cells (22), and the plurality of battery cell groups are arranged in a second direction (y);
in the second direction (y), there is at least one second battery cell (22) between any two of the first battery cells (21); and
the first direction (x) intersects with the second direction (y), and the first direction (x) and the second direction (y) are both perpendicular to an axis of the first battery cell (21) and an axis of the second battery cell (22).

5. The battery according to claim 4, wherein the first battery cell (21) and the second battery cell (22) are cylindrical battery cells, and the plurality of battery cell groups are arranged in a staggered manner in the second direction (y).

6. The battery according to claim 5, wherein:
the axes of all the battery cells in two adjacent ones of the battery cell groups have non-coincident orthographic projections on a first plane (15);
the axes of all the battery cells in two of the battery cell groups which are not adjacent to each other but are separated by one of the battery cell groups have coincident orthographic projections on the first plane (15); and
the first plane (15) is perpendicular to a plane formed by the first direction (x) and the second direction (y).

7. The battery according to claim 6, wherein in a battery cell group, two adjacent ones of the second battery cells (22) and one of the first battery cells (21) are alternately arranged in the first direction (x).

8. The battery according to claim 7, wherein the battery further comprises a bus component (14), and the bus component (14) is configured to connect the two adjacent ones of the second battery cells (22) in parallel and then connect these second battery cells to the one of the first battery cells (21) in series.

9. The battery according to claim 8, wherein the bus component (14) comprises a first connecting portion (141) and a second connecting portion (142), and the first connecting portion (141) and the second connecting portion (142) form a V shape;
wherein a first end of the first connecting portion (141) is connected to an electrode terminal of one second battery cell (22) of the two adjacent second battery cells (22), a second end of the first connecting portion (141) is connected to a third end of the second connecting portion (142) and is then connected to a terminal post of the one of the first battery cells (21), and a fourth end of the second connecting portion (142) is connected to an electrode terminal of the other second battery cell (22) of the two adjacent second battery cells (22).

10. The battery according to claim 9, wherein an included angle between the first connecting portion (141) and the second connecting portion (142) is 40°-70°.

11. The battery according to claim 10, wherein the included angle between the first connecting portion (141) and the second connecting portion (142) is 50°-65°.

12. The battery according to claim 9, wherein a width W1 of the first connecting portion (141) and a width W2 of the second connecting portion (142) satisfy: W1 = W2.

13. The battery according to claim 8, wherein the bus component (14) comprises a third connecting portion (143) and a fourth connecting portion (144), and the third connecting portion (143) and the fourth connecting portion (144) form a T shape;
wherein a first end and a second end of the third connecting portion (143) are respectively connected to different electrode terminals of the two adjacent second battery cells (22), and a third end of the fourth connecting portion (144) is connected to an electrode terminal of the one of the first battery cells (21), and a fourth end of the fourth connecting portion (144) is connected to a middle part of the third connecting portion (143).

14. The battery according to claim 13, wherein a width W3 of the third connecting portion (143) and a width W4 of the fourth connecting portion (144) satisfy: W3 ≤ W4.

15. The battery according to any one of claims 6 to 14, wherein the battery further comprises end plates (12), and the end plates (12) are provided at two ends of the battery cell group in the first direction (x).

16. The battery according to claim 15, wherein a first surface (121) of the end plate (12) facing the interior of the battery is provided with a structural member (123) protruding towards the interior of the battery, and the structural member (123) is filled in a space between the battery cells at an end portion of the battery in the first direction (x) and the first surface (121) of the end plate (12).

17. The battery according to claim 16, wherein the structural member (123) is a trapezoidal structural member, which comprises a top wall (1231) provided opposite to the end plate (12) in the first direction (x) and side walls connected to the end plate (12), and the top wall (1231) and the side walls abut against the battery cells at the end portion of the battery in the first direction (x).

18. The battery according to any one of claims 15 to 17, wherein a second surface (122) of the end plate (12) facing away from the interior of the battery is provided with a reinforcing rib (124).

19. The battery according to claim 18, wherein the reinforcing rib (124) is of an X-shaped structure.

20. The battery according to any one of claims 15 to 19, wherein the end plate (12) is of a hollow structure.

21. The battery according to claim 20, wherein a cross beam (125) is provided in the hollow structure.

22. The battery according to any one of claims 6 to 21, wherein the battery further comprises side plates (13), the side plates (13) are provided at two ends of the battery cell group in a third direction (z), and the third direction (z) is parallel to the axes of the battery cells.

23. The battery according to claim 22, wherein a third surface (131) of the side plate (13) facing the interior of the battery is provided with grooves (133) recessed in a direction away from the interior of the battery, a fourth surface (132) of the side plate (13) facing away from the interior of the battery is provided with protrusions (134) corresponding to the grooves (133) and protruding in the direction away from the interior of the battery, and the grooves (133) are provided corresponding to the battery cell groups.

24. The battery according to claim 23, wherein the groove (133) extends in the first direction (x) and is provided opposite to an explosion-proof valve (23) of each battery cell in the battery cell group in the third direction (z).

25. The battery according to claim 24, wherein thickness L2 of a bottom wall of the groove (133) opposite to the corresponding explosion-proof valve (23) is greater than thickness L1 of other regions of the side plate (13) except the groove (133).

26. A power consuming device, comprising: a battery according to any one of claims 1 to 25, the battery being configured to supply electric energy.
